Europäisches Patentamt

(19) European Patent Office

Office européen des brevets

(11) Publication number: **0 121 542**
**B1**

(12) **EUROPEAN PATENT SPECIFICATION**

(45) Date of publication of patent specification: **20.04.88**

(51) Int. Cl.⁴: **B 65 G 47/82,** B 67 C 3/24

(21) Application number: **83903176.2**

(22) Date of filing: **10.10.83**

(86) International application number:
**PCT/DK83/00094**

(87) International publication number:
**WO 84/01559 26.04.84 Gazette 84/11**

(54) **A FILLING STATION FOR GAS CYLINDERS COMPRISING MEANS FOR SUPPLYING THE CYLINDERS TO A CARROUSEL.**

(30) Priority: **11.10.82 DK 4478/82**

(43) Date of publication of application:
**17.10.84 Bulletin 84/42**

(45) Publication of the grant of the patent:
**20.04.88 Bulletin 88/16**

(84) Designated Contracting States:
**FR**

(56) References cited:
**DE-A-1 556 695**
**DE-A-2 535 064**
**GB-A-1 199 398**

(73) Proprietor: **Kosan Crisplant A/S**
**P.O. Pedersensvej 10**
**DK-8200 Aarhus N. (DK)**

(72) Inventor: **HANSEN, Sören, Edvard**
**H.P. Jensensvej 3**
**DK-8270 Hojbjerg (DK)**
Inventor: **TRYK, Paul**
**Dalvangen 27**
**DK-8270 Hojbjerg (DK)**

(74) Representative: **Urbanus, Henricus Maria, Ir.**
**et al**
**c/o Vereenigde Octrooibureaux Nieuwe**
**Parklaan 107**
**NL-2587 BP 's-Gravenhage (NL)**

Courier Press, Leamington Spa, England.

## Description

The present invention relates to a filling station for LPG gas cylinders or a corresponding plant having a carrousel for successive reception of gas cylinders as pushed onto respective platform units arranged along the periphery of the carrousel and a stationary inlet station comprising an inlet conveyor having a foremost support for a cylinder to be transferred to the carrousel, said support being located flush with and laterally next to the platform units as successively passing by the inlet station, and pusher means operable to push the cylinder from said support on to a passing-by platform unit.

Such filling stations are known in the art. As said each platform unit is provided with overhead means for connecting the gas cylinders with a respective filling device and, in weight filling plants, each platform unit constitutes a weighing platform, the gas cylinders have to be positioned correctly onto the carrousel at predetermined positions thereon. For practical reasons the filling carrousel should be moved with an even rotational movement, whereby an accurate supply of the gas cylinders should ideally take place along a path tangential to the carrousel, but since each filling device on the carrousel is expensive, the distance between the position of removal of the filled cylinders from the carrousel and the position of introduction of the new cylinders should be small to keep the number of non-operative filling devices as low as possible, and in practice as known this is achieved by introducing the new cylinders substantially radially onto the carrousel, viz. in conjunction with the passage of each of the platform units past a station for supplying the cylinders from outside. It is no principal problem, of course, to push a gas cylinder onto a passing-by platform unit, but a practical problem is faced anyway in that the pushing in should be effected with a reasonably high speed and under the condition that the platform unit already during the introduction causes the gas cylinder, by frictional engagement therewith, to be brought along by the carrousel already before the termination of the introduction, whereby the final positioning of the gas cylinder may be inaccurate. The positioning accuracy may be improved by increased speed of introduction, but such a high speed, itself, will create problems with respect to acceleration and deceleration of the cylinders.

It is the purpose of the invention to provide a simple transfer system, which is operable to introduce the gas cylinders in a practically satisfactory manner, even independent of variations in the rotational movement of the carrousel.

According to the invention this is achieved in that the pusher means comprise a swivel arm, which is rotatable about a vertical axis located adjacent the lee side of the inlet conveyor relative the movement of the passing by platform units, and which is swingable into the path of the cylinders on the inlet conveyor behind the foremost cylinder as located on said support so as to engage the rear side of this cylinder with a side area of the outer end of the swivel arm and thus push the cylinder into initial frictional engagement with a platform unit, the rotation of the swivel arm being synchronized with the peripheral speed of the carrousel such that the outer end of the swivel arm will generally follow the cylinder as now moved by said frictional engagement and cause the cylinder to be gradually pushed fully onto the platform unit until the cylinder leaves the outer end of the swivel arm when the latter moves through a position perpendicular to the main direction of the local movement of the cylinder receiving platform unit past the inlet station. In practice it has been found, that a well controlled introduction movement of the cylinder is to be achieved in this simple way, viz. an almost ideally decelerated radial movement of the cylinder and simultaneously a likewise ideally accelerated movement thereof in the moving direction of the carrousel. As the swivel arm is operated in synchronism with the carrousel, the conditions as to the radial and the peripheral movements of the cylinders will be the same irrespective of the momentary moving velocity of the carrousel, i.e. no attention should be paid to this velocity being high or low.

The swivel arm may be designed as a double arm rotating about a vertical middle axis, whereby one end of the arm may initiate the introduction of a new cylinder immediately after the other end has terminated the introduction of the preceding cylinder, i.e. the simple arrangement may easily operate with a considerable introduction capacity.

In the following the invention is explained in more detail with reference to the drawings, in which:

Fig. 1 is a schematic top view of a system according to the invention with the said swivel arm shown in different positions during the initial introduction of a gas cylinder onto a filling carrousel,

Fig. 2 is a corresponding view illustrating the final stages of the introduction, and

Fig. 3 is a top view of a broader fraction of the filling carrousel.

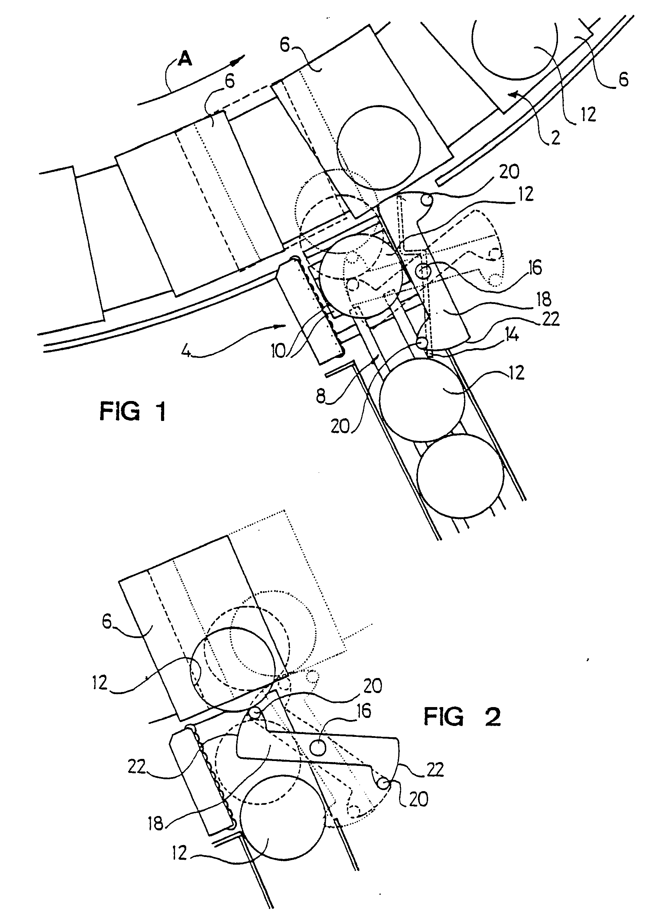

In Fig. 1 is indicated a filling carrousel 2 for gas cylinders, which are to be introduced from an inlet station 4 onto individual weighing platforms 6 on the carrousel. The inlet station 4 is arranged endwise of a radial supply conveyor line 8 and is provided with support rollers 10 for receiving a single gas cylinder 12, a retractable stop member 14 being provided for holding back the following gas cylinders on the conveyor line 8. The filling carrousel rotates in the direction illustrated by an arrow A, and having regard to the location of the inlet station 4 adjacent the carrousel and the direction A a vertical shaft 16 is located downstream and close to said inlet station 4. The vertical shaft 16 carries, on its top, a bilaterally projecting arm 18, which, by rotation of the shaft 16, is swingable so as to engage the gas cylinder 12 which has been conveyed into the inlet station 4.

As shown in dashed lines the cylinder 12 will hereby be caused to get pushed forwardly on the rollers 10 for initial introduction onto a passing-by weighing platform 6 of the carrousel 2, and already by this initial introduction the cylinder 12 will be influenced to move towards the right by its frictional engagement with the platform 6, i.e. the cylinder will now start being moved along with the carrousel, normally during a certain self rotation of the cylinder; the swivel arm is provided with a laterally projecting nose portion having an outermost roller 20, which will allow the cylinder to rotate without any substantial friction against the swivel arm. Besides, the outer end of the swivel arm is shaped as a concentric circular surface 22, which, during the following pushing movement, will reach to get partly displaced against the periphery of the cylinder to be filled towards a platform unit 6 moving along the inlet station 4, now as seen in the moving direction of the carrousel, such that during the movement it will constitute a guiding surface which will engage the cylinder tangentially with a tangential plane of engagement, the horizontal direction of which forming with the main direction of the local movement of each platform unit a decreasing acute angle as the cylinder is carrying out the last part of its introduction movement. Very soon thereafter the cylinder will slide off tangentially from the outer end of the swivel arm, which, itself, will be swung a distance along with and thereafter away from the moving path of the cylinder. These last phases of the introduction of the cylinder are illustrated in Fig. 2.

Immediately after the swivel arm 18 has initiated the introduction of a cylinder onto the carrousel the stop member 14 is retracted or swung away from the next cylinder, which is then, by the conveyor, moved into the delivery station 4, and as soon as the preceding introduction has been finished the new cylinder will be introduced by means of the swivel arm portion at the other side of the shaft 16, whereby the introduction capacity can be high.

It may be suitable that the cylinders during the first phase of the introduction are supported against a lateral railing in the right hand side of the inlet station, such that the frictional bringing along of a cylinder by the carrousel is not initiated until the cylinder has already advanced a distance onto the carrousel. In a simple device for this purpose the stop member 14 is constituted by the end of a radial rod, which is pivoted about the shaft 16 and is extended to the opposite side of the shaft, whereby the outward pivoting of the stop end 14 will be associated with the extension pivoting inwardly to a position, in which it forms the said support railing just at the time it is needed, e.g. until the cylinder has advanced slightly further than to the position as shown in dash lines in Fig. 1; hereby, then, the next cylinder will be on its way into the station 4, and the stop rod 14 may now be swung back for stopping the next following cylinder while the lateral railing is correspondingly swung outwardly.

It has been found that a well defined cylinder introduction is achievable irrespective of the moving velocity of the carrousel, when the swivel arm rotates in synchronism therewith.

Different cylinders, of course, may behave slightly different with respect to the detailed mutual movements of the swivel arm and the cylinders, but the result is nevertheless that the introduction will take place with an effectively decelerated inlet movement and an effectively accelerated movement in the moving direction of the carrousel, such that the cylinders are delivered onto the support platforms 6 with a high degree of safety and accuracy.

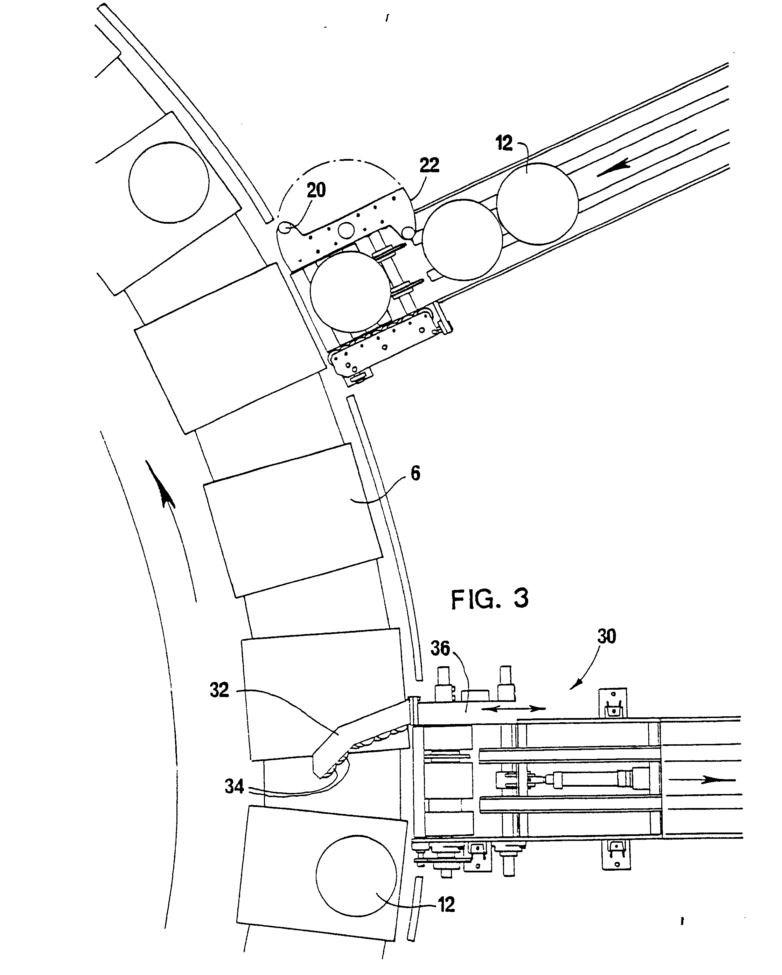

In Fig. 3 is shown that the inlet station may be located quite close to a station 30 for letting out the cylinders from the carrousel. Also in the station 30 the frictional engagement between the cylinders and the carrousel is utilized for contributing to the control of the desired movement of the cylinders. The cylinders are normally removed by means of an extraction hook, which, by means of a heavy moving device, is pushed into the moving path of the cylinders in front of each cylinder as having caused, through the control system of the carrousel, a ready signal with respect to correct filling to be produced, whereafter the hook is retracted for pulling out the cylinder. These movements may give rise to certain problems with respect to synchronization with the movement of the carrousel, and the cylinders may be handled in a rather rough manner.

In the outlet station as shown in Fig. 3 is used for the cylinder removal a passive element shaped as an oblique arm 32, which is provided with a number of rollers 34 on its side as facing the cylinders and is mounted on a slide 36, by means of which the arm 32 is radially reciprocal relative the carrousel, controlled e.g. by a compressed air working cylinder. The associated control system is designed such that the arm remains in its active position until the arrival of any such cylinder, which has produced a "not ready" signal, e.g. an only partly filled cylinder, whereby the slide 36 is actuated for rapid retraction of the oblique arm 32.

Thus, the cylinders to be let out are simply moved against the oblique arm 32, which will produce on the cylinders an outwardly directed component of force as based on the existing frictional engagement with the carrousel. This influence is sufficient for a rapid outlet of the cylinder, which is then brought to an outlet conveyor belt in the station 30.

With the use of the oblique arm 32 a full synchronization between the outlet movement and the carrousel movement will be obtained quite automatically, as the former is simply directly determined by the latter.

It will be appreciated that the invention is not limited to the cylinder carrying device being a carrousel, since a straight lined conveyor could be used as well.

## Claims

1. A filling station for LPG gas cylinders or a corresponding plant having a carrousel for successive reception of gas cylinders as they are pushed onto respective platform units arranged along the periphery of the carrousel and a stationary inlet station, said station comprising an inlet conveyor having a foremost support for a cylinder to be transferred to the carrousel, said support being located flush with and laterally next to the platform units as successively passing by the inlet station, and pusher means operable to push the cylinder from said support on to a passing-by platform unit characterized in that the pusher means comprise a swivel arm (18), which is rotatable about a vertical axis (16) located adjacent the lee side of the inlet conveyor (8) relative to the movement of the passing by platform units (6), and which is swingable into the path of the cylinders on the inlet conveyor (8) behind the foremost cylinder (12) as it is located on said support (10) so as to engage the rear side of this cylinder with a side area (20) of the outer end of the swivel arm and thus push the cylinder (12) into initial frictional engagement with a platform unit (6), the rotation of the swivel arm (18) being synchronized with the peripheral speed of the carrousel such that the outer end (20, 22) of the swivel arm will generally follow the cylinder as now moved by said frictional engagement and cause the cylinder to be gradually pushed fully onto the platform unit (6) until the cylinder leaves the outer end (22) of the swivel arm (18) when the latter moves through a position perpendicular to the main direction of the local movement of the cylinder receiving platform unit (6) past the inlet station (4).

2. A station according to claim 1, characterized in that the swivel arm is a double arm (18) projecting equally to both sides of a vertical axis (16).

3. A station according to claim 1 or 2 characterized in that the cylinders are removed from the carrousel by abutting an oblique guiding arm (32) as pushed into their moving path.

## Patentansprüche

1. Füllanlage für LPG-Gasflachen oder entsprechende Einrichtung mit einem Karussell zur Aufnahme von Gasflachen nacheinander, wenn diese auf jeweilige, über den Umfang des Karussells angeordnete Plattformen geschoben werden und mit einer ortsfesten Zuführeinrichtung, die ein Zuführband mit einer vorderen Abstützfläche für eine auf das Karussell zu übertragende Flasche aufweist, welche Abstützfläche in einer Ebene mit und seitlich neben den Plattformen angeordnet ist, wenn diese nacheinander die Zuführeinrichtung passieren, und weiter Schubmittel zum Schieben der Flasche von der Abstützfläche auf eine passierende Plattform aufweist, dadurch gekennzeichnet, dass die Schubmittel einen Schwenkarm (18) aufweisen, der um eine an der Leeseite des Zuführbandes (8) relativ zur Bewegung der passierenden Plattformen (6) angeordnete vertikale Achse (16) drehbar und in den Weg der Flaschen auf dem Zuführband (8) hinter der vordersten Flasche (12) einschwenkbar ist, wenn diese sich auf der Abstützfläche (10) befindet, um die Rückseite dieser Flasche mit einer Seitenfläche (20) des äusseren Endes des Schwenkarmes zu ergreifen und so die Flasche (12) in anfangs reibenden Angriff mit einer Plattform (6) zu schieben, wobei die Rotation des Schwenkarmes (18) mit der Umfangsgeschwindigkeit des Karussells so synchronisiert ist, dass das äussere Ende (20, 22) des Schwenkarmes der Flasche im allgemeinen folgt, wenn diese nunmehr durch den Reibungsangriff bewegt wird, und die Flasche allmählich völlig auf die Plattform (6) schiebt, bis die Flasche das äussere Ende (22) des Schwenkarmes (18) verlässt, wenn letzterer durch eine Lage senkrecht zur Hauptrichtung der örtlichen Bewegung der die Flasche aufnehmenden Plattform (6) hinter der Zuführeinrichtung (4) bewegt wird.

2. Anlage nach Anspruch 1, dadurch gekennzeichnet, dass der Schwenkarm ein Doppelarm (18) ist, der in gleichem Masse nach beiden Seiten einer vertikalen Achse (16) vorsteht.

3. Anlage nach Anspruch 1 oder 2, dadurch gekennzeichnet, dass die Flaschen durch Anstossen an einen in ihren Fahrweg geschobenen, schrägen Führungsarm (32) vom Karussell entfernt werden.

## Revendications

1. Poste de remplissage de bouteilles de gaz de pétrole liquéfie ou installation correspondante ayant un carrousel assurant la réception successive de bouteilles de gaz lorsqu'elles sont repoussées sur des ensembles respectifs à plate-forme placés à la périphérie du carrousel, et un poste fixe d'entrée, le poste comprenant un transporteur d'entrée ayant un support avant d'une bouteille destinée à être transférée sur le carrousel, le support étant placé au niveau des ensembles à plate-forme et étant décalé latéralement par rapport à eux lorsqu'il passe en face du poste d'entrée, et un dispositif de poussée destiné à repousser la bouteille du support sur un ensemble à plate-forme qui défile, caractérisé en ce que le dispositif de poussée comprend un bras pivotant (18) qui peut tourner autour d'un axe vertical (16) placé près du côté aval du transporteur d'entrée (8) compte tenu du mouvement des ensembles (6) à plate-forme qui défilent, et pouvant pivoter sur le trajet des bouteilles placées sur le transporteur d'entrée (8) derrière la bouteille (12) la plus en avant lorsqu'elle est placée sur le support (10), afin qu'il soit au contact de la face arrière de cette bouteille, avec une zone latérale (20) de l'extrémité externe du bras pivotant, et repousse la bouteille (12) afin qu'elle vienne coopérer initialement par frottement avec un ensemble à plate-forme (6), la rotation du bras pivotant (18) étant synchronisée sur la vitesse périphérique du carrousel si bien que l'extrémité externe (20, 22) du bras pivotant suit de façon générale la bouteille lorsqu'elle est déplacée par sa coopération par friction et provoque une poussée progressive de la bouteille entièrement sur l'ensemble à plate-forme (6) jusqu'à ce que la bouteille quitte l'extrémité externe (22) du bras pivotant (18) lorsque celui-ci passe à une position perpendiculaire à la direction principale du mouvement local de l'ensemble (6) à plate-forme qui porte la bouteille devant le poste d'entrée (4).

2. Poste selon la revendication 1, caractérisé en ce que le bras pivotant est un bras double (18) dépassant également des deux côtés d'un axe vertical (16).

3. Poste selon l'une des revendications 1 et 2, caractérisé en ce que les bouteilles sont retirées du carrousel par butée contre un bras oblique (32) de guidage poussé sur leur trajet de déplacement.

0 121 542

FIG 1

FIG 2

1

FIG. 3